# FASCICULE DE BREVET EUROPEEN

(11) **EP 3 423 733 B1**
(45) Date de publication et mention de la délivrance du brevet: **13.01.2021**
(21) Numéro de dépôt: 17704500.2
(22) Date de dépôt: 16.02.2017
(51) Int. Cl.: F16F 1/373, F16F 1/38

(54) **DISPOSITIF D'AMORTISSEMENT DE VIBRATIONS ENTRE UN PREMIER ÉLÉMENT VIBRANT ET UN DEUXIÈME ÉLÉMENT**
SCHWINGUNGSDÄMPFUNGSVORRICHTUNG ZWISCHEN EINEM ERSTEN SCHWINGUNGSELEMENT UND EINEM ZWEITEN ELEMENT
VIBRATION DAMPING DEVICE BETWEEN A FIRST VIBRATING ELEMENT AND A SECOND ELEMENT

(30) Priorité: 04.03.2016 FR 1651856
(43) Date de publication de la demande: 09.01.2019
(73) Titulaire: Cooper Standard France, 35000 Rennes (FR)
(72) Inventeur: GENDRON, Stéphane, 35380 Paimpont (FR)
(74) Mandataire: Regimbeau
(86) Numéro de dépôt international: PCT/EP2017/053458
(87) Numéro de publication internationale: WO 2017/148707

(56) Documents cités:
- DE-B3- 10 249 387
- US-A1- 2007 063 401
- US-A1- 2012 267 184

## Description

L'invention concerne un dispositif d'amortissement de vibrations entre un premier élément vibrant et un deuxième élément.

Le domaine d'application de l'invention peut être tout élément vibrant, tel que par exemple un moteur, devant être fixé à un châssis, comme par exemple à la caisse d'un véhicule automobile. Le document US2012267184 divulgue les caractéristiques du préambule de la revendication 1.

Le document FR-A-2 829 208 décrit un dispositif d'amortissement de vibrations, comprenant des premier et deuxième éléments rigides et un support antivibratoire pour réunir ces deux éléments, amortir des vibrations entre ces deux éléments et supporter une charge selon une première direction verticale, le support comportant lui-même :
- deux armatures rigides respectivement intérieure et extérieure, adaptées pour être reliées respectivement avec les premier et deuxième éléments rigides, l'armature extérieure ayant une forme annulaire entourant l'armature intérieure et comportant un passage traversé par l'armature intérieure, et
- un corps en élastomère assurant une liaison entre l'armature intérieure et l'armature extérieure.

Ce dispositif connu présente l'inconvénient dû au fait que le corps élastomère nécessite la présence d'une coupelle métallique surmoulée dans la partie inférieure de ce corps élastomère pour assurer le maintien de celui-ci en partie inférieure de l'armature extérieure.

De ce fait, dans ce dispositif connu, le corps en élastomère coopère, via une coupelle inférieure surmoulée, avec l'armature extérieure dans une zone affleurant sensiblement une face opposée au passage, à savoir contre un longeron faisant partie du véhicule automobile et fermant le caisson contre le premier élément rigide fixé au moteur.

Dans le dispositif connu, l'amortissement se fait donc par le corps en élastomère adhérisé contre une coupelle elle-même disposée contre la face ouverte du caisson située à proximité du longeron.

L'invention vise à obtenir un dispositif d'amortissement des vibrations entre un premier élément vibrant et un deuxième élément, permettant de limiter les déplacements suivant les 2 sens des 3 directions verticale, transversale et longitudinale, ne nécessitant avantageusement pas la présence d'une quelconque coupelle en partie inférieure du corps élastomère et en assurant un maintien du corps élastomère dans la partie inférieure d'une armature extérieure.

L'objet de l'invention est un dispositif (1) d'amortissement de vibrations entre un premier élément (E1) vibrant et un deuxième élément (E2),
le dispositif comportant :
un membre (2) destiné à être fixé au premier élément vibrant (E1), le membre (2) comportant un bras (21) s'étendant suivant une direction transversale horizontale (T) et une tête (22), laquelle prolonge le bras (21) dans un premier sens (t2) de la direction transversale (T) et est plus large que le bras (21) dans une direction verticale (V),
une armature (3) destinée à être fixée au deuxième élément (E2),
un corps (4) en élastomère fixé au membre (2) et tourné vers l'armature (3),
caractérisé en ce que l'armature (2) comporte au moins une première patte (33), au moins une deuxième patte (34), au moins une première surface(331) et au moins une deuxième surface (332), qui s'étendent dans le premier sens (t2) en face d'une première ouverture (32) de l'armature (3),
le corps (4) en élastomère comportant une partie supérieure (41) moulée autour de la tête (22) et une embase (42) comportant au moins deux jambes élastomères (425,426), ces jambes ayant au moins deux trous (421,422),
le maintien de l'embase (42) du corps (4) dans l'armature (3) étant assuré par l'emmanchement des jambes (425,426) sur les pattes (33,34) respectivement au travers des trous (421,422) et la compression de l'élastomère des jambes (425,426) entre respectivement les première et deuxième surfaces (331,332) et les première et deuxième pattes (33,34).

Suivant un mode de réalisation, la partie supérieure (41) comporte des protubérances (411,412,413,414,423), ces protubérances venant buter respectivement sur d'autres surfaces (361,362,371,351,363) de l'armature (3), ces protubérances amortissant et limitant les déplacements entre l'élément (E1) et l'élément (E2) suivant respectivement :
- les deux sens (l1, l2) d'une direction horizontale longitudinale,
- un sens vertical ascendant (v2),
- un deuxième sens (t1) de la direction transversale (T), inverse du premier sens (t2),
- un sens vertical descendant (v1).

Suivant un mode de réalisation, la partie supérieure (41) comporte une protubérance (415) venant buter en partie supérieure de la première ouverture (32) sur une surface aménagée sur l'élément (E2), cette protubérance amortissant et limitant le déplacement suivant le premier sens (t2).

Suivant un autre mode de réalisation, l'embase (42) du corps élastomère (4) est raccordée dans un sens vertical (v1) à un prolongement vertical (43),
l'armature (3) comportant une troisième surface (39) dans laquelle est aménagée une deuxième ouverture (38) s'étendant autour de la direction verticale (V) et étant, suivant la direction transversale (T) et une direction horizontale longitudinale (L), plus large que le prolongement (43), la deuxième ouverture (36) étant traversée par le prolongement 1 (43),
l'armature (3) ayant au moins une quatrième surface (381), qui est située en face du prolongement transversal (43) dans le premier sens (t2).

Suivant un mode de réalisation, une goupille amovible (5) est insérée suivant la direction (V) dans un trou (431) du prolongement (43) et est emmanchée dans un trou (221) de la tête (22) pour devenir solidaire de la tête (22), cette goupille (5) s'étend dans la troisième ouverture (38) de l'armature (3).

Suivant un mode de réalisation, le prolongement (43) amortit et limite le déplacement de l'élément (2) suivant le premier sens (t2) en venant au contact de la quatrième surface (381) de l'armature (3). Plusieurs variantes peuvent être réalisées pour amortir et limiter les déplacements suivant les directions (t1) (l1) (l2) de manière identique à la direction (t2).

Suivant un mode de réalisation, il est prévu que l'armature (3) a une contour (37) délimitant une troisième ouverture (31),
l'ouverture (31) s'étendant autour de la direction transversale (T) et étant, suivant les directions (V) et (L) plus large que le bras (21) pour que l'armature (3) entoure le bras (21) au niveau de cette ouverture (31),
l'ouverture (31) étant moins large que la tête (22) suivant la direction V, l'armature (3) ayant un contour (36) délimitant la première ouverture (32),
la première ouverture (32) s'étendant autour de la direction transversale (T) et étant, suivant les directions (V) et (L), plus large que la tête (22), pour permettre le passage du membre (2) au travers de la première ouverture (32).

Suivant un mode de réalisation, le corps (4) en élastomère est surmoulé sur la tête (22) du membre (2) et est inséré dans l'armature (3).

Suivant un mode de réalisation, l'armature (3) comporte au moins une première patte (33) et au moins une deuxième patte (34), par exemple de formes oblongues inclinées, qui s'étendent dans le sens (t1) en face de la première ouverture (32) et qui sont positionnées en saillie en partant d'une surface (35) de l'armature (3).

Suivant un mode de réalisation, le corps (4) en élastomère comportant une partie supérieure (41) surmoulée autour de la tête (22) et une partie inférieure (42), appelée ci-après embase, ayant pour fonction la fixation à l'armature (3), l'embase (42) prolongeant la partie supérieure (41) dans le sens vertical (v1), l'embase(42) comportant au moins un premier trou (421) et au moins un deuxième trou (422), dans lesquels sont emmanchés respectivement la première patte (33) et la deuxième patte (34) pour la fixation du corps (4) en élastomère à l'armature (3). L'embase (42) supporte la charge et amortit les vibrations sous faibles efforts suivant les directions (V) (L) et (T).

L'invention sera mieux comprise à la lecture de la description qui va suivre, donnée uniquement à titre d'exemple non limitatif en référence aux dessins annexés, sur lesquels :
- la figure 1 est une vue schématique en perspective arrière du dispositif d'amortissement de vibrations suivant un mode de réalisation de l'invention à l'état monté,
- la figure 2 est une vue schématique en coupe du dispositif d'amortissement de vibrations suivant la figure 1 à l'état monté,
- la figure 3 est une vue schématique en perspective avant du dispositif d'amortissement de vibrations à l'état monté,
- la figure 4 est une vue schématique en perspective arrière du dispositif d'amortissement de vibrations de la figure 1,
- la figure 5 est une vue schématique en perspective avant du dispositif d'amortissement de vibrations de la figure 3,
- la figure 6 est une vue schématique en perspective avant en éclaté du dispositif d'amortissement de vibrations de la figure 1, et
- la figure 7 est une vue schématique en coupe du dispositif d'amortissement suivant un second mode de réalisation de l'invention à l'état monté,
- la figure 8 est une vue schématique en perspective du dispositif d'amortissement suivant la figure 7 à l'état monté,
- la figure 9 est une vue schématique en perspective du dispositif d'amortissement suivant la figure 7 à l'état démonté.

Aux figures, l'invention est décrite en référence à trois directions orthonormales L, T et V de l'espace, à savoir une direction longitudinale horizontale L, une direction transversale horizontale T et une direction verticale V.

Aux figures, le corps 4 en élastomère est fixé à l'armature 3 dans une zone située à l'écart de l'ouverture 31 de passage du membre 2 dans l'armature 3 et à distance de la deuxième ouverture 32 servant au passage de la tête 22 du membre 2, ainsi que cela sera décrit ci-dessous. Le membre 2 est rigide et est par exemple métallique. L'armature 3 est rigide et par exemple métallique.

Le dispositif 1 d'amortissement de vibrations est destiné à être monté entre un premier élément E1 et un deuxième élément E2.

Le dispositif 1 comporte le membre 2 destiné à être fixé au premier élément vibrant E1. Le membre 2 comporte un bras 21 s'étendant suivant la direction transversale T. Le bras 21 est destiné à être fixé au premier élément vibrant E1. Le membre 2 comporte également une tête 22, qui prolonge le bras 21 dans un premier sens t2 de la direction transversale T et qui est plus large que le bras 21 suivant la direction verticale V.

En outre, le dispositif 1 comporte l'armature 3 destinée à être fixée au deuxième élément E2.

Le premier élément vibrant E1 est un élément pouvant émettre des vibrations mécaniques, lorsqu'il est mis en fonctionnement et lorsque le dispositif 1 est à l'état monté. L'état monté du dispositif 1 s'entend lorsqu'à la fois le premier élément E1 est fixé au membre 2 et l'armature 3 est fixée au deuxième élément E2.

Le premier élément vibrant E1 peut être par exemple un moteur d'un véhicule automobile, tandis que le deuxième élément E2 peut être une caisse d'un véhicule automobile. A cet effet, le dispositif peut comporter des premiers moyens de fixation de l'armature 3 au deuxième élément E2.

L'armature 3 a une forme générale ouverte, ayant deux ouvertures 31 et 32 assurant un passage suivant la direction transversale T. L'ouverture 32 étant ouverte dans sa partie supérieure. Ci-dessous, l'ouverture 32 est appelée première ouverture 32, l'ouverture 31 est appelée troisième ouverture 31 et l'ouverture 38 est appelée deuxième ouverture 38.

L'armature 3 comporte une surface 37 délimitant l'ouverture 31. L'ouverture 31 s'étend autour de la direction transversale T. Cette ouverture 31 est plus large que le bras 21 et moins large que la tête 22. Ainsi, l'armature 3 entoure le bras 21 au niveau de cette première ouverture 31 et retient la tête 22.

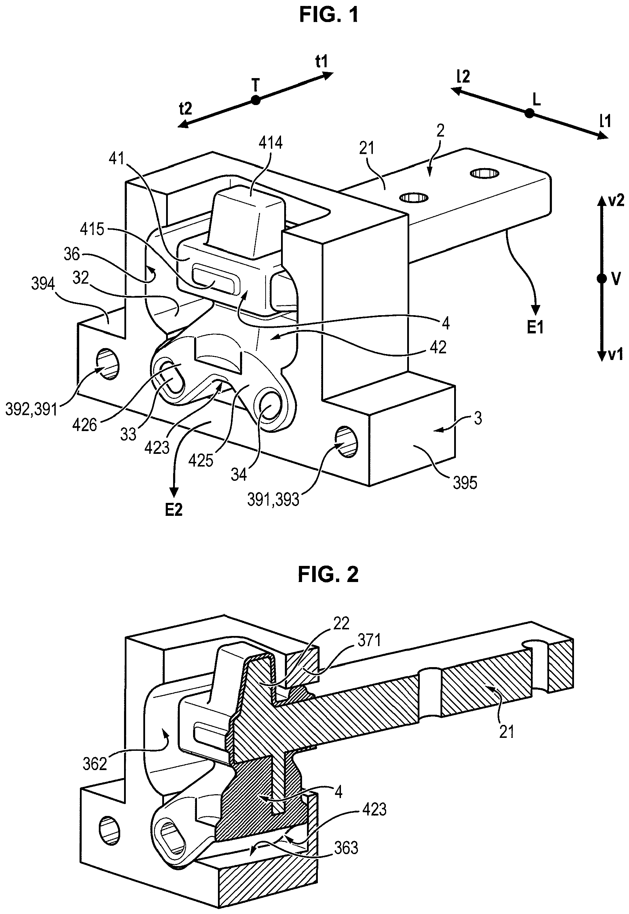

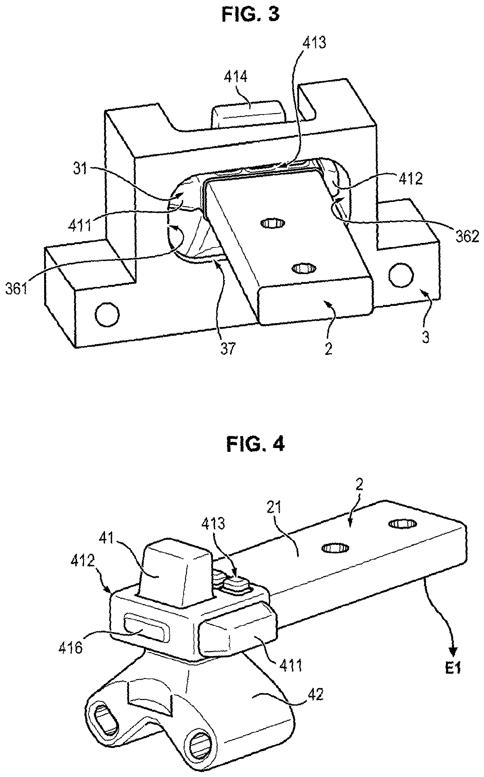

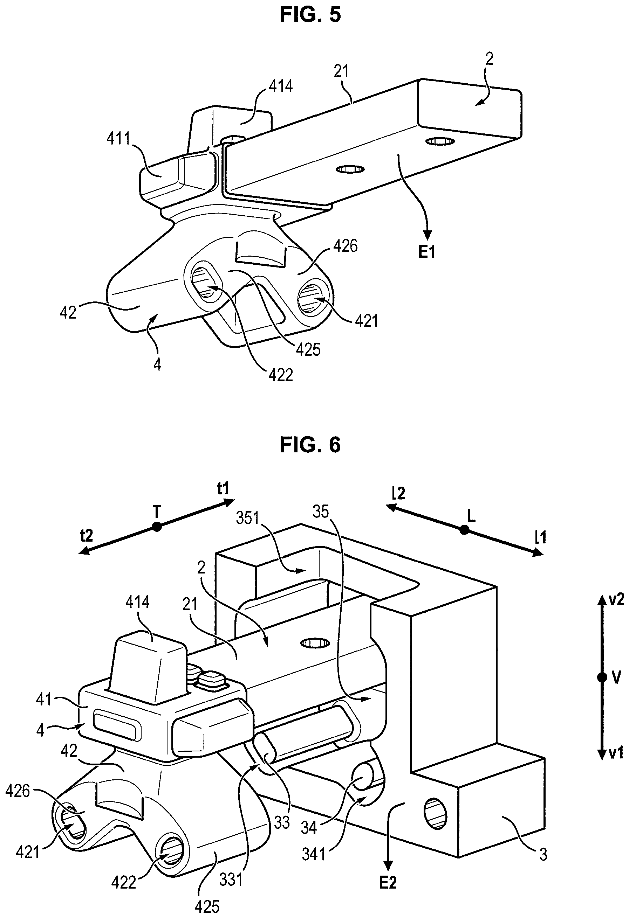

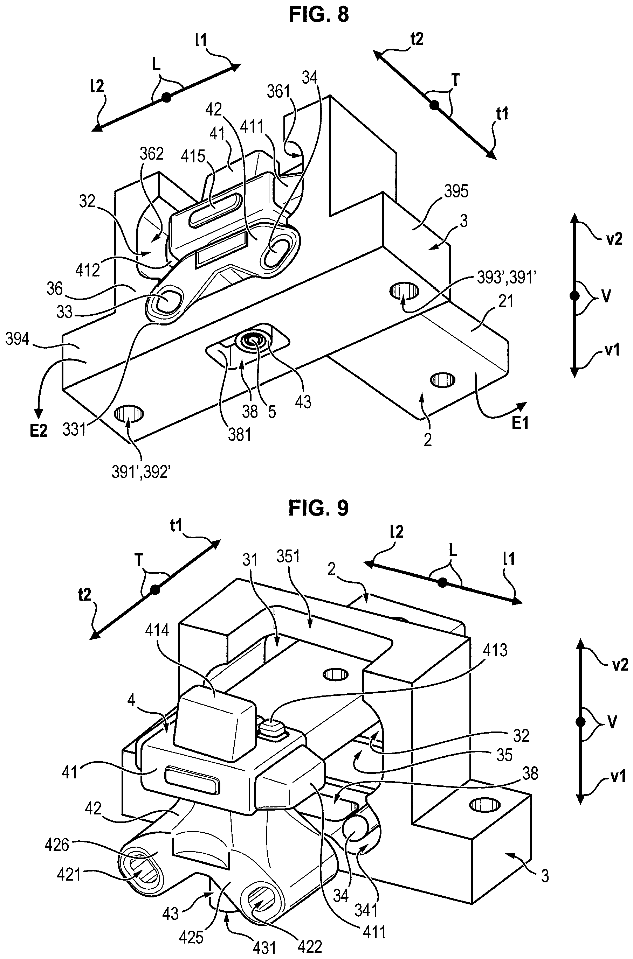

En outre, l'armature 3 comporte un contour 36 délimitant l'ouverture 32. L'ouverture 32 s'étend autour de la direction transversale T. Ainsi, la deuxième ouverture 32 permet le passage du membre 2 pour faire passer, lors du montage du dispositif 1 sur le véhicule automobile, le membre 2 de l'état démonté de la figure 6 ou 9, dans lequel l'embase 42 est à distance de l'armature 3, à l'état monté des figures 1, 2 et 3 ou 8, où le membre 2 traverse l'ouverture 31 et le corps 4 en élastomère est fixé par son embase 42 à l'armature 3. Le corps 4 en élastomère est fixé à au moins une surface extérieure du membre 2. Le corps 4 en élastomère est tourné vers l'armature 3 à l'état monté du dispositif 1. Ce corps 4 en élastomère est lié à la tête 22.

Suivant un mode de réalisation, l'armature 3 comporte une surface 35 s'écartant de la première ouverture 31 en partant de la surface 37 délimitant l'ouverture 31. La surface 35 s'étend au moins dans le deuxième sens v1 (vertical descendant) de la direction verticale V. L'armature 3 comporte au moins une première patte 33 et au moins une deuxième patte 34, qui s'étendent dans le premier sens t2 en face de la deuxième ouverture 32 et qui sont positionnées en saillie en partant de la surface 35.

Le corps 4 en élastomère comporte une partie supérieure 41 moulée autour de la tête 22. Le corps 4 en élastomère comporte également l'embase 42 ayant pour fonction la fixation du corps 4 en élastomère à l'armature 3. L'embase 42 prolonge la partie intermédiaire 41 dans le sens vertical v1 descendant. L'embase 42 comporte au moins un premier trou 421 et au moins un deuxième trou 422, qui s'étendent suivant la direction transversale T et par lesquels sont emmanchées en force respectivement la première patte 33 et la deuxième patte 34 pour la fixation du corps 4 en élastomère à l'armature 3. A cet effet, les premier et deuxième trous 421 et 422 peuvent avoir, à l'état démonté du membre 2, une première dimension inférieure à une deuxième dimension parallèle à la première dimension des première et deuxième pattes 33 et 34, ces dimensions étant prises dans un plan perpendiculaire à la direction transversale T. Ainsi, à l'état monté, lorsque les première et deuxième pattes 33 et 34 sont insérées dans respectivement les premier et deuxième trous 421 et 422, l'élastomère de l'embase 42 autour des premier et deuxième trous 421 et 422 est comprimé par les première et deuxième pattes 33 et 34, assurant une fixation de l'embase 42 aux première et deuxième pattes 33 et 34. Par exemple, les premier et deuxième trous 421 et 422 sont traversants. Toutefois, les premier et deuxième trous 421 et 422 pourraient être borgnes. Ainsi, à l'état monté, le corps 4 en élastomère est fixé autour des pattes 33 et 34 contre la troisième surface 35 qui, en étant à l'écart de la première ouverture 31, dispose de plus de place pour les pattes 33 et 34. Chaque patte 33, 34 peut être par exemple de forme arrondie, par exemple ovale ou circulaire, ou autre, autour de la direction longitudinale L, en pouvant être cylindrique autour de la direction transversale T.

Suivant un mode de réalisation, l'embase 42 comporte deux jambes épaisses 425 et 426, situées dessous la tête 22 dans le premier sens vertical v1 et qui sert à la rigidification de l'embase 42 et du corps 4 en élastomère. La jambe 425 est celle entourant le trou 422 et la jambe 426 est celle entourant le trou 421.

Suivant un mode de réalisation, l'armature 3 comporte une surface 331 située en face de la première patte 33 et une surface 341 située en face de la deuxième patte 34. Les surfaces 331 et 341 sont raccordées à la surface 363 et servent à appuyer respectivement contre les jambes 425 et 426. On renforce ainsi la fixation du corps 4 en élastomère à l'armature 3, ainsi que la rigidité du corps 4 en élastomère. A cet effet, les intervalles entre les première et deuxième pattes 33 et 34 et les surfaces 331 et 341 peuvent avoir, à l'état démonté du membre 2, une dimension inférieure à celle des parties élastomères des jambes 426 et 425 entourant les trous 421 et 422 destinées à y être insérées. Ainsi, à l'état monté, lorsque les première et deuxième pattes 33 et 34 sont insérées dans respectivement les premier et deuxième trous 421 et 422, l'élastomère de l'embase 44 situé entre les première et deuxième pattes 33 et 34 et les surfaces 331 et 341 est comprimé, assurant une meilleure fixation de l'embase 42 aux première et deuxième pattes 33 et 34.

Ce mode d'assemblage permet d'avoir un maintien et un amortissement des vibrations tout en évitant de devoir adhériser le corps 4 en élastomère à une autre coupelle métallique distante du membre 2, ce qui simplifie la fabrication du dispositif 1 et diminue son coût.

Suivant un mode de réalisation, le corps 4 en élastomère comporte une protubérance 414 située en face et à distance d'une surface 351 de l'armature 3 dans un deuxième sens t1 de la direction transversale T, inverse du premier sens t2. Ainsi, cette protubérance 414 est apte à buter contre la surface 351 pour amortir les vibrations et limiter les déplacements du corps 4 en élastomère suivant le sens t1.

Suivant un mode de réalisation, le corps 4 en élastomère comporte une protubérance 411 située en face et à distance d'une surface 361 de l'armature 3 dans un premier sens l1 de la direction longitudinale horizontale L. Ainsi, cette protubérance 411 est apte à buter contre la surface 361 pour amortir les vibrations et limiter les déplacements du corps 4 en élastomère suivant le sens l1.

Suivant un mode de réalisation, le corps 4 en élastomère comporte une protubérance 412 située en face et à distance d'une surface 362 de l'armature 3 dans un deuxième sens l2 de la direction longitudinale horizontale L, inverse du premier sens l1. Ainsi, cette protubérance 412 est apte à buter contre la surface 362 pour amortir les vibrations et limiter les déplacements du corps 4 en élastomère suivant le sens l2.

Suivant un mode de réalisation, le corps 4 en élastomère comporte une protubérance 413 située en face et à distance d'une surface 371 de l'armature 3 dans un sens vertical ascendant v2. Ainsi, cette protubérance 413 est apte à buter contre la surface 371 pour amortir les vibrations et limiter les déplacements du corps 4 en élastomère suivant le sens v2.

Suivant un mode de réalisation, le corps 4 en élastomère comporte une protubérance 423 située en face et à distance d'une surface 363 de l'armature 3 dans un sens vertical descendant v1. Ainsi, cette protubérance 423 est apte à buter contre la surface 363 pour amortir les vibrations et limiter les déplacements du corps 4 en élastomère suivant le sens v1.

Suivant un mode de réalisation, le corps 4 en élastomère comporte une protubérance 415 située en face et à distance d'une surface préalablement aménagée sur l'élément E2 en face de la partie supérieure de la seconde ouverture 32 dans le sens t2. Ainsi, cette protubérance 415 est apte à buter contre la surface de l'élément E2 pour amortir les vibrations et limiter les déplacements du corps 4 en élastomère suivant le sens t2.

Suivant un mode de réalisation, représenté sur les figures 1, 2, 3, 4, 5 et 6, l'armature 3 est fixée sur une paroi sensiblement verticale de l'élément E2. Cette paroi pouvant être ouverte ou fermée en face de l'embase 42 du corps 4 en élastomère. L'embase 42 du corps élastomère 4 étant maintenue par les pattes 33 et 34 et les surfaces 331 et 341, cette embase 42 ne nécessite donc aucune coopération de l'élément E2 ou l'ajout d'une quelconque armature métallique complémentaire pour assurer son maintien au sein de l'élément 3 comme c'était le cas dans l'art antérieur (brevet FR2829208). L'armature 3 peut comporter des premiers moyens 391 de fixation dans le sens horizontal t2 à cet effet. Ces moyens 391 comportent par exemple des trous traversants 392, 393 de passage de vis dans le sens t2 sur deux parties inférieures 394 et 395 dépassant longitudinalement de l'armature 2, de part et d'autre de l'ouverture 32.

Ainsi, le corps 4 en élastomère est positionné pour buter, dans les deux sens des trois directions orthonormales L, T et V de l'espace, contre des surfaces correspondantes 361, 362, 363, 371, 351 de l'armature 3 et une surface préalablement aménagée sur l'élément E2 ou sur la caisse du véhicule automobile en face de la partie supérieure de l'ouverture 32 de l'armature 3.

Ainsi, l'élément 1 assure la filtration, l'amortissement des vibrations et la limitation des débattements suivant les 2 sens des 3 directions L, T et V entre l'élément E1 et l'élément E2.

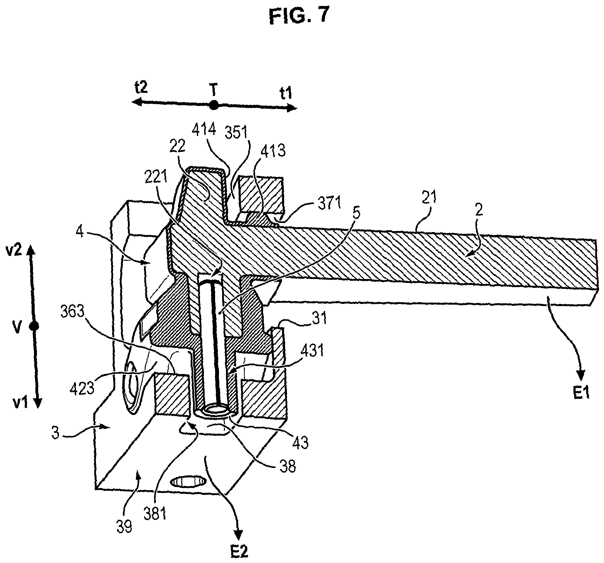

Suivant un second mode de réalisation, représenté aux figures 7, 8 et 9, l'embase 42 est raccordée dans le sens vertical v1 descendant à un prolongement vertical 43. L'armature 3 comporte une ouverture 38 traversante suivant la direction verticale V. L'ouverture 38 s'étend au moins dans la direction longitudinale L et transversale T et est traversée dans le sens vertical descendant v1 par le prolongement transversal 43. L'armature 3 a en outre au moins une surface 381, qui s'étend à partir de la surface 39 jusqu'à l'ouverture 32. La surface 381 est située en face du prolongement transversal 43 dans le premier sens t2.

Ainsi, le déplacement du corps 4 en élastomère dans le premier sens longitudinal t2 est limité par la surface 381 faisant partie de l'armature 3. Ainsi, la deuxième ouverture 32, peut rester béante sans devoir être fermée par une paroi de l'élément E2, du fait que le corps 4 en élastomère est apte à buter par son prolongement transversal 43 contre la surface 381 dans le sens t1. Le prolongement 43 peut être situé sensiblement contre la surface 381 à l'état monté, avec donc une distance sensiblement nulle ou très petite entre la surface 381 et le prolongement 43.

Suivant ce second mode de réalisation, le dispositif comporte une goupille 5, qui, à l'état monté, est fixée à la tête 22 et qui s'étend dans la troisième ouverture 38 suivant le sens v1. A l'état monté, la goupille 5 est située au centre du prolongement vertical 43. Cette goupille 5 permet de renforcer la tenue du prolongement 43 contre la surface 381.

Suivant ce second mode de de réalisation, le prolongement 43 est situé entre la première jambe 425 et la deuxième jambe 426. L'embase 42 offre ainsi, par les jambes 425 et 426, une assise stable et rigidifiée au prolongement transversal 43.

Suivant ce second mode de réalisation, la goupille 5 est une pièce amovible, rapportée sur la tête 22 lorsque le prolongement transversal 43 est inséré dans l'ouverture 38. Ainsi, pour monter le dispositif 1, on insère d'abord le bras 21 dans l'ouverture 31 en insérant la tête 22 au travers de l'ouverture 32 et on enfile l'embase 42 autour des pattes 33 et 34 de manière à faire passer le prolongement43 dans l'ouverture 38, par déformation de ce prolongement vertical 43. Puis, on insère la goupille 5 dans la tête 22 en traversant l'ouverture 38 et le corps 4 en élastomère.

A cet effet, suivant ce second mode de réalisation, le prolongement vertical 43 comporte un trou 431 de passage de la goupille 5.

Suivant ce second mode de réalisation, la tête 22 comporte un trou 221 d'insertion de la goupille 5 dans la tête 22.

Suivant ce second mode de réalisation, représenté sur la figure 9, l'armature 3 est fixée sur une paroi sensiblement horizontale de l'élément E2. L'armature 3 peut comporter des deuxièmes moyens 391' de fixation dans le sens vertical v1 à cet effet. Ces moyens 391' comportent par exemple des trous traversants 392', 393' de passage de vis dans le sens V1 sur deux parties inférieures 394 et 395 dépassant longitudinalement de l'armature 2, de part et d'autre de l'ouverture 32.

Suivant ce mode de réalisation, l'embase 42 du corps élastomère 4 étant maintenue par les pattes 33 et 34 et les surfaces 331 et 341, cette embase 42 ne nécessite donc pas d'ajout d'une quelconque armature métallique complémentaire pour assurer son maintien au sein de l'élément 3.

Ainsi, suivant ce second mode de réalisation, le corps 4 en élastomère est positionné pour buter, dans les deux sens des trois directions orthonormales L, T et V de l'espace, contre des surfaces correspondantes 361, 362, 363, 351, 371 et 381 de l'armature 3, se dispensant ainsi de buter contre le deuxième élément E2 ou contre la caisse du véhicule automobile.

Bien entendu, il pourrait être prévu une seule patte et une embase 42 ayant un seul trou dans lequel est emmanché en force la patte ou une seule jambe ayant un seul trou dans lequel est emmanché en force la patte, le terme deux pouvant être remplacé par au moins un dans ce qui précède.

Bien entendu, chaque caractéristique indiquée ci-dessus peut être sélectionnée indépendamment des autres caractéristiques ou être combinée à une ou plusieurs autres caractéristiques dans le dispositif.

## Revendications

1. Dispositif (1) d'amortissement de vibrations entre un premier élément (E1) vibrant et un deuxième élément (E2),
le dispositif comportant :
un membre (2) destiné à être fixé au premier élément vibrant (E1), le membre (2) comportant un bras (21) s'étendant suivant une direction transversale horizontale (T) et une tête (22), laquelle prolonge le bras (21) dans un premier sens (t2) de la direction transversale (T),
une armature (3) destinée à être fixée au deuxième élément (E2),
un corps (4) en élastomère fixé au membre (2) et tourné vers l'armature (3), l'armature (2) comporte au moins une première patte (33), au moins une deuxième patte (34), au moins une première surface(331) et au moins une deuxième surface (332), qui s'étendent dans le premier sens (t2) en face d'une première ouverture (32) de l'armature (3),
le corps (4) en élastomère comportant une partie supérieure (41) moulée autour de la tête (22) et une embase (42) comportant au moins deux jambes élastomères (425,426), **caractérisé en ce que** ces jambes ont au moins deux trous (421,422),
le maintien de l'embase (42) du corps (4) dans l'armature (3) étant assuré par l'emmanchement des jambes (425,426) sur les pattes (33,34) respectivement au travers des trous (421,422) et la compression de l'élastomère des jambes (425,426) entre respectivement les première et deuxième surfaces (331,332) et les première et deuxième pattes (33, 34), la tête étant plus large que le bras (21) dans une direction verticale (V).

2. Dispositif suivant la revendication 1, **caractérisé en ce que**
la partie supérieure (41) comporte des protubérances (411,412,413,414,423), ces protubérances venant buter respectivement sur d'autres surfaces (361,362,371,351,363) de l'armature (3), ces protubérances amortissant et limitant les déplacements entre l'élément (E1) et l'élément (E2) suivant respectivement :
- les deux sens (l1, l2) d'une direction horizontale longitudinale,
- un sens vertical ascendant (v2),
- un deuxième sens (t1) de la direction transversale (T), inverse du premier sens (t2),
- un sens vertical descendant (v1).

3. Dispositif suivant l'une des revendications 1 et 2, **caractérisé en ce que**
la partie supérieure (41) comporte une protubérance (415) venant buter en partie supérieure de la première ouverture (32) sur une surface aménagée sur l'élément (E2), cette protubérance amortissant et limitant le déplacement suivant le premier sens (t2).

4. Dispositif suivant l'une des revendications 1 et 2, **caractérisé en ce que** l'embase (42) du corps élastomère (4) est raccordée dans un sens vertical (v1) à un prolongement vertical (43),
l'armature (3) comportant une troisième surface (39) dans laquelle est aménagée une deuxième ouverture (38) s'étendant autour de la direction verticale (V) et étant, suivant la direction transversale (T) et une direction horizontale longitudinale (L), plus large que le prolongement (43), la deuxième ouverture (38) étant traversée par le prolongement (43),
l'armature (3) ayant au moins une quatrième surface (381), qui est située en face du prolongement vertical (43) dans le premier sens (t2).

5. Dispositif suivant la revendication 4, **caractérisé en ce que** une goupille amovible (5) est insérée suivant la direction (V) dans un trou (431) du prolongement (43) et est emmanchée dans un trou (221) de la tête (22) pour devenir solidaire de la tête (22), cette goupille (5) s'étend dans la troisième ouverture (38) de l'armature (3),
le prolongement (43) amortit et limite le déplacement de l'élément (2) suivant le premier sens (t2) en venant au contact de la quatrième surface (381) de l'armature (3).

## Patentansprüche

1. Vorrichtung (1) zur Dämpfung von Vibrationen zwischen einem ersten vibrierenden Element (El) und einem zweiten Element (E2),
wobei die Vorrichtung umfasst:
eine Komponente (2), die dafür vorgesehen ist, an dem ersten vibrierenden Element (El) befestigt zu werden, wobei die Komponente (2) einen Arm (21), der sich entlang einer horizontalen Querrichtung (T) erstreckt, und einen Kopf (22) umfasst, welcher den Arm (21) in einem ersten Sinn (t2) der Querrichtung (T) verlängert,
einen Anker (3), der dafür vorgesehen ist, an dem zweiten Element (E2) befestigt zu werden,
einen Körper (4) aus Elastomer, der an der Komponente (2) befestigt und zu dem Anker (3) gedreht ist,
wobei der Anker (3) zumindest eine erste Lasche (33), zumindest ein zweite Lasche (34), zumindest eine erste Oberfläche (331) und zumindest eine zweite Oberfläche (332) umfasst, die sich gegenüber einer ersten Öffnung (32) des Ankers (3) in dem ersten Sinn (t2) erstrecken,
wobei der Körper (4) aus Elastomer einen oberen Abschnitt (41) umfasst, der um den Kopf (22) geformt ist, und einen Sockel (42) umfasst, der zumindest zwei Elastomerschenkel (425,426) aufweist, **dadurch gekennzeichnet, dass** diese Schenkel zumindest zwei Löcher (421,422) aufweisen,
wobei der Halt des Sockels (42) des Körpers (4) in dem Anker (3) durch das Aufschieben der Schenkel (425,426) jeweils auf die Laschen (33,34) durch die Löcher (421,422) und das Komprimieren des Elastomers der Schenkel (425,426) jeweils zwischen der ersten und der zweiten Oberfläche (331,332) und der ersten und der zweiten Lasche (33,34) sichergestellt wird, wobei der Kopf in einer vertikalen Richtung (V) breiter als der Arm (21) ist.

2. Vorrichtung nach Anspruch 1, **dadurch gekennzeichnet, dass**
der obere Abschnitt (41) Vorsprünge (411,412,413,414,423) aufweist, wobei diese Vorsprünge jeweils gegen andere Oberflächen (361,362,371,351,363) des Ankers (3) stoßen, wobei diese Vorsprünge die Bewegungen zwischen dem Element (El) und dem Element (E2) dämpfen und begrenzen jeweils in:
- beiden Sinne (11,12) einer horizontalen Längsrichtung,
- einer nach oben gerichteten vertikalen Richtung (v2),
- einem zweiten Sinn (t1) der Querrichtung (T), die dem ersten Sinn (t2) entgegengesetzt ist,
- einer nach unten gerichteten vertikalen Richtung (v1).

3. Vorrichtung nach einem der Ansprüche 1 und 2, **dadurch gekennzeichnet, dass**
der obere Abschnitt (41) einen Vorsprung (415) aufweist, der im oberen Teil der ersten Öffnung (32) gegen eine Fläche stößt, die an dem Element (E2) ausgebildet ist, wobei dieser Vorsprung die Bewegung in dem ersten Sinn (t2) dämpft und begrenzt.

4. Vorrichtung nach einem der Ansprüche 1 und 2, **dadurch gekennzeichnet, dass**
der Sockel (42) des Elastomerkörpers (4) in einem vertikalen Sinn (v1) mit einer vertikalen Verlängerung (43) verbunden ist,
wobei der Anker (3) eine dritte Oberfläche (39) aufweist, in der eine zweite Öffnung (38) ausgebildet ist, die sich um die vertikale Richtung (V) erstreckt und entlang der Querrichtung (T) und einer horizontalen Längsrichtung (L) breiter als die Verlängerung (43) ist, wobei die zweite Öffnung (38) von der Verlängerung (43) durchquert wird,
wobei der Anker (3) zumindest eine vierte Fläche (381) aufweist, die gegenüber der vertikalen Verlängerung (43) in dem ersten Sinn (t2) angeordnet ist.

5. Vorrichtung nach Anspruch 4, **dadurch gekennzeichnet, dass**
ein herausnehmbarer Stift (5) in der Richtung (V) in eine Bohrung (431) der Verlängerung (43) eingesetzt und in eine Bohrung (221) des Kopfes (22) geschoben wird, um mit dem Kopf (22) fest verbunden zu werden, wobei sich dieser Stift (5) in die dritte Öffnung (38) des Ankers (3) erstreckt,
wobei die Verlängerung (43) die Bewegung der Komponente (2) in dem ersten Sinn (t2) dämpft und begrenzt, indem sie mit der vierten Oberfläche (381) des Ankers (3) in Berührung kommt.

## Claims

1. A device (1) for damping vibrations between a first vibrating element (E1) and a second element (E2),
the device including:
a member (2) designed to be attached to the first vibrating element (E1), the member (2) including an arm (21) extending along a transverse horizontal direction (T) and a head (22), which prolongs the arm (21) in a first orientation (t2) of the transverse direction (T),
a framework (3) designed to be attached to the second element (E2),
a body (4) made of elastomer attached to the member (2) and turned toward the framework (3),
wherein the framework (3) comprises at least one first tab (33), at least one second tab (34), at least one first surface (331) and at least one second surface (332), which extend in the first orientation (t2) in front of a first opening (32) of the framework (3),
the body (4) made of elastomer comprising an upper portion (41) molded around the head (22) and a base (42) comprising at least two elastomer legs (425, 426), **characterized in that** these legs have at least two holes (421,422),
the retention of the base (42) of the body (4) in the framework (3) being ensured by fitting of the legs (425,426) over the tabs (33,34) respectively through the holes (421,422) and by compressing of the elastomer of the legs (425, 426) between respectively the first and second surfaces (331, 332) and the first and second tabs (33,34), wherein the head is wider than the arm (21) in a vertical direction (V).

2. The device according to claim 1, **characterized in that**
the upper portion (41) comprises protuberances (411, 412, 413, 414, 423), these protuberances coming into abutment respectively on other surfaces (361, 362, 371, 351, 363) of the framework (3), these protuberances damping and limiting the displacements between the first element (E1) and the second element (E2) in respectively:
- both orientations (11, 12) of a horizontal longitudinal direction,
- an ascending vertical orientation (v2),
- a second orientation (t1) of the transverse direction (T), the reverse of the first orientation (t2),
- a vertical descending orientation (v1).

3. The device according to one of claims 1 and 2, **characterized in that**
the upper portion (41) includes a protuberance (415) coming into abutment in the upper portion of the first opening (32) on a surface provided on the second element (E2), this protuberance damping and limiting the displacement along the first orientation (t2).

4. The device according to one of claims 1 and 2, **characterized in that**
the base (42) of the elastomer body (4) is connected in a vertical orientation (v1) to a vertical prolongation (43),
the framework (3) including a third surface (39) in which is provided a second opening (38) extending around the vertical direction (V) and being, along the transverse direction (T) and a horizontal longitudinal direction (L), wider than the prolongation (43), the prolongation (43) passing through the second opening (36),
the framework (3) having at least one fourth surface (381) which is situated facing the vertical prolongation (43) in the first orientation (t2).

5. The device according to claim 4, **characterized in that**
a removable pin (5) is inserted in the direction (V) in a hole (431) in the prolongation (43) and is fitted into a hole (221) in the head (22) to become integral with the head (22), this pin (5) extending into the third opening (38) of the framework (3),
the prolongation (43) damps and limits the displacement of the element (2) in the first orientation (t2) by coming into contact with the fourth surface (381) of the framework (3).
